# EUROPÄISCHE PATENTANMELDUNG

(11) **EP 1 747 940 A1**
(43) Veröffentlichungstag der Anmeldung: **31.01.2007**
(21) Anmeldenummer: 06009752.4
(22) Anmeldetag: 11.05.2006
(51) Int. Cl.: B60R 13/08

(54) **Flächige Wand, insbesondere Aufbauwand mit schall- und schwingungsdämpfung**

(30) Priorität: 30.07.2005 DE 102005035751
(71) Anmelder: Dr.Ing. h.c.F. Porsche Aktiengesellschaft, 70435 Stuttgart (DE)
(72) Erfinder: Joest, Rainer, 71665 Vaihingen/Enz (DE)

(57) **Zusammenfassung**

Diese flächige Wand ist insbesondere als Aufbauwand für ein Kraftfahrzeug einsetzbar, die zumindest bereichsweise mit einer an ihr befestigten schall- und schwingungsdämpfenden Einrichtung versehen ist, welche Einrichtung durch eine vorgefertigte Verkleidung gebildet wird, die bspw. mehrere Lagen aufweist.

Um die Einrichtung zu optimieren, ergibt sich durch definierten Beschnitt (9) der vorgefertigten Verkleidung (4) zumindest eine erste Verkleidungsvorrichtung (10) und eine zweite Verkleidungsvorrichtung (11), die als schall- und schwingungsdämpfende Einrichtungen an zwei verschiedenen Aufbauwänden wirksam sind, wobei ausgehend von der Gesamtfläche der Verkleidung jede Verkleidungsvorrichtung (10,11) einen relativ großen Flächenbereich der zugehörigen Aufbauwand abdeckt.

## Beschreibung

Die Erfindung bezieht sich auf eine flächige Wand, insbesondere Aufbauwand für ein Kraftfahrzeug nach dem Oberbegriff des Patentanspruchs 1.

Es ist bekannt, US 2,090,459, an einer flächigen Aufbauwand einer Tür eines Kraftfahrzeuges eine relativ dicke zusätzliches Gewicht verursachende Klebeschicht an einer einem Fahrgastraum zugewandten Innenseite des Kraftfahrzeugs vorzusehen. Diese Schicht dient beim Betrieb des Kraftfahrzeugs zur Reduktion von störende Geräusche verursachenden Schwingungen. Diese Schwingungen werden vor allem durch Drehmomentimpulse einer das Kraftfahrzeug antreibenden Brennkraftmaschine hervorgerufen.

Aus der DE 25 26 325 A1 geht eine mehrschichtige schall- und schwingungstechnische Verkleidung für Karosserieteile hervor, die aus einer karosseriefesten Schicht eines federnden porösen Werkstoffs besteht. Letzterer ist durch einen anhaftenden schweren Belag abgedeckt.

In der US 6,102,465 geht eine Geräusch isolierende Struktur für einen Fahrgastraum eines Kraftfahrzeugs hervor, welche Struktur mehrere Schall absorbierende Vorrichtungen umfasst, die unter anderem im Bereich von flächigen Bereichen eines Dachs und einer Bodenanlage angebracht sind. Diese Vorrichtungen umfassen mehrere Lagen aus unterschiedlichen Werkstoffen und ziehen eine Erhöhung des Gewichts des Kraftfahrzeugs nach sich.

Es ist Aufgabe der Erfindung eine Aufbauwand eines Kraftfahrzeugs mit einer schall- und schwingungsdämpfenden Einrichtung zu versehen, die bei guter Funktion bezüglich Gewicht optimiert ist.

Nach der Erfindung wird diese Aufgabe durch die Merkmale des Patentanspruchs 1 gelöst. Weitere, die Erfindung ausgestaltend Merkmale sind in den Unteransprüchen enthalten.

Die mit der Erfindung hauptsächlich erzielten Vorteile sind darin zu sehen, dass die schall- und schwingungsdämpfende Einrichtung eine einfach herstellbare vorgefertigte Verkleidung ist, die durch einen definierten Beschnitt, der auch als Schnittmuster bezeichnet werden kann, eine erste Verkleidungsvorrichtung und eine zweite Verkleidung ergibt. Jede dieser Verkleidungsvorrichtungen ist gegenüber der aus mehreren Lagen bestehenden Verkleidung bezüglich Gewicht deutlich reduziert, wobei beide Verkleidungsvorrichtungen an verschiedenen Aufbauwänden befestigbar sind und dort beim Betrieb des Kraftfahrzeugs schall- und schwingungsdämpfend wirken. Eine gute Funktion der Verkleidungsvorrichtungen wird erreicht, dass letztere einander zugekehrte Verkleidungsabschnitte besitzen, zwischen denen Verkleidungsausschnitte verlaufen. Der Beschnitt ergibt dann leicht zu realisierende Verkleidungsvorrichtungen, wenn er nach Art eines Labyrinths mit in sich verschlungene Verkleidungsabschnitten und Verkleidungsausschnitten ausgeführt ist. Schließlich kann der Beschnitt der Verkleidung einen wellen- oder zinkenförmigen Verlauf aufweisen, dergestalt, dass an den Verkleidungsvorrichtungen eine Art Kammprofil mit Verkleidungsabschnitten und Verkleidungsausschnitten entsteht.

In der Zeichnung wird ein Ausführungsbeispiel der Erfindung gezeigt, das nachstehend näher beschrieben ist.

### Es zeigen

- Fig. 1: eine vorgefertigte schall- und vibrationsdämpfende Verkleidung für eine flächige Wand, insbesondere Aufbauwand eines Kraftfahrzeugs,
- Fig. 2: einen Schnitt nach der Linie II-II der Fig. 1,
- Fig. 3: eine Ansicht entsprechend Fig. 1 mit einer ersten Ausführungsform eines Beschnitts an der Verkleidung,
- Fig. 4: eine Ansicht entsprechend Fig. 1 mit einer zweiten Ausführungsform eines Beschnitts an der Verkleidung,
- Fig. 5: eine Tür eines Kraftfahrzeugs mit einer Aufbauwand, an der eine Einrichtung zur Schall- und Vibrationsdämpfung vorgesehen ist,
- Fig. 6: einen Schnitt nach der Linie VI-VI der Fig. 5,
- Fig. 7: eine Ansicht entsprechend Fig. 5 mit einer anderen Ausführungsform.

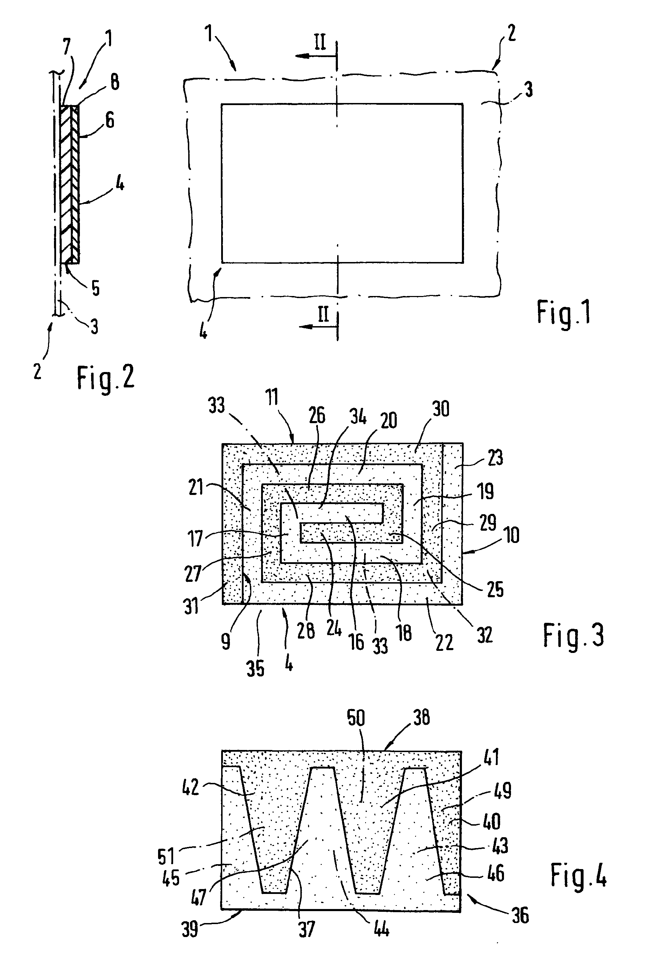

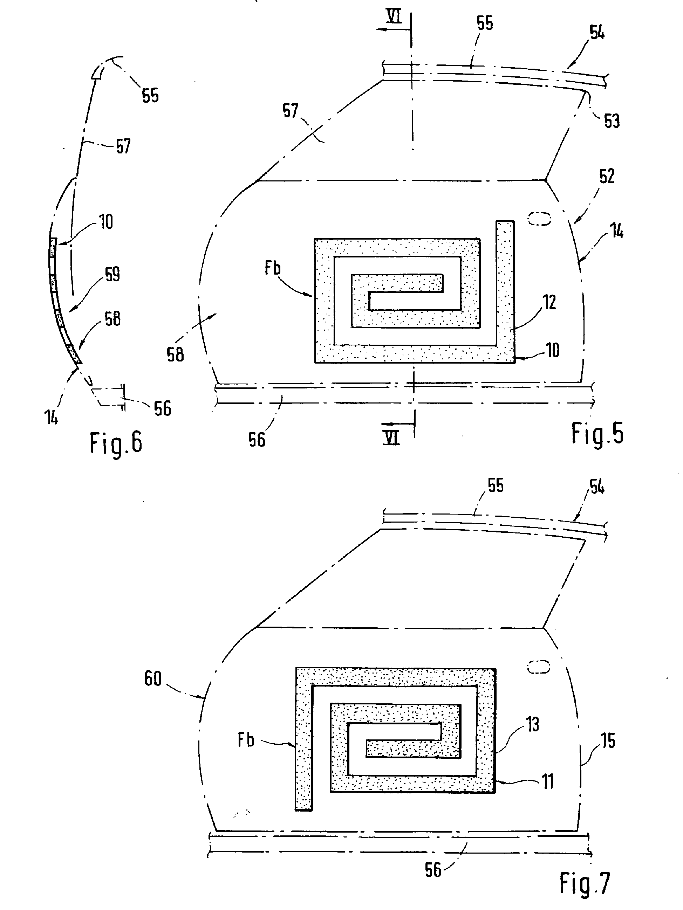

Eine Einrichtung 1 für eine flächige Wand 2, die eine Aufbauwand 3 eines nicht gezeigten Kraftfahrzeugs sein kann, wirkt schall- und vibrationsdämpfend, wie dies in der US 6,102 465 erläutert wird. Die Einrichtung 1 erstreckt sich über eine festgelegte Fläche der Aufbauwand 3, wird durch eine vorgefertigte Verkleidung 4 mit bspw. rechteckiger Grundform gebildet und umfasst mehrere Lagen 5 und 6. Die Lage 5 kann aus einer an der Aufbauwand 3 befestigten porösen Schicht 7 bestehen, die mit einem relativ schweren Träger 8 verbunden ist. Durch einen definierten Beschnitt 9 - Fig. 3 - der Verkleidung 4 ergibt sich einer erste Verkleidungsvorrichtung 10 und eine zweite Verkleidungsvorrichtung 11, die als schall- und vibrationsdämpfende Einrichtungen 12 und 13 - Fig. 5 und 7 - an zwei verschiedenen Aufbauwänden 14 und 15 wirksam sind. Dabei ist sichergestellt, dass ausgehend von der Gesamtfläche der Verkleidung 4 jede Verkleidungsvorrichtung 10 oder 11 einen relativ großen Flächenbereich Fb der zugehörigen Aufbauwand 14 oder 15 zur effektiven Schall- uns Vibrationsdämpfung abdeckt.

Jede Verkleidungsvorrichtung z.B. 10 oder 11 weist flächige Verkleidungsabschnitte 16, 17, 18, 19, 20, 21, 22 und 23 bzw. 24, 25, 26, 27, 28, 29, 30 und 31 auf, zwischen denen korrespondierende Verkleidungssauschnitte 32 bzw. 33 verlaufen , wobei durch den Verlauf des Beschnitts 9, ausgeführt nach Art eines Labyrinths, die besagten Verkleidungsabschnitte und die Verkleidungsausschnitte in sich verschlungen sind. Die Verkleidungsabschnitte 16 bis 23 der Verkleidungsvorrichtung 10 sind durch z.B. im rechten Winkel zueinander sich erstreckende Gerade dargestellt, die von einem inneren Bereich 34 aus zu einem äußeren Bereich 35 hin vergrößern d.h. Verkleidungsabschnitt 18 ist länger als Verkleidungsabschnitt 16; sinngemäß gilt dies auch für die Verkleidungsabschnitte 17 und 19. Anstelle der etwa rechteckigen Ausführung der Verkleidung 4 ist auch denkbar ihr eine quadratische oder kreisförmige Form zu verleihen. In letzterem Fall kann der Beschnitt 9 in der Weise ausgeführt sein, dass die Verkleidungsabschnitte und die Verkleidungsausschnitte in Form einer Spirale - gekrümmte Linie , die unendlich viele Umläufe um einen festen Punkt macht - verlaufen.

Die Fig. 4 gibt eine Verkleidung 36 wieder, bei der ein Beschnitt 37 eine wellenförmige oder verzahnungsartige Form aufweist. Hierdurch ergibt sich eine erste Verkleidungsvorrichtung 38 und eine zweite Verkleidungsvorrichtung 39. Die Verkleidungsvorrichtung 38 ist mit Verkleidungsabschnitten 40, 41 und 42 und Verkleidungsausschnitten 43, 44 und 45 versehen; bei der Verkleidungsvorrichtung 39 sind Verkleidungsabschnitte mit 46, 47 und 48 und Verkleidungsausschnitte mit 49, 50 und 51 bezeichnet. Darüber hinaus bewirkt der Beschnitt 37 der Verkleidung 36, dass der wellenförmige oder verzahnungsartige Verlauf an der jeweiligen Verkleidungsvorrichtung 38 oder 39 eine Art Kammprofil mit den entsprechenden Verkleidungsabschnitten und Verkleidungsausschnitten schafft.

Aus Fig. 5 geht eine linke Tür 52 - Fahrertür - eines Kraftfahrzeugs hervor, die in eine Öffnung 53 eines Aufbaus 54 eingesetzt ist. Die Tür 52 wird von einem Dachrahmen 55 sowie einem Bodenrahmen 56 begrenzt und umfasst eine Türscheibe 57 und einen

Türkörper 58, in den die Türscheibe 57 versenkbar ist. Der Türkörper 58 ist mit der Aufbauwand 14 versehen, die an einer einem Fahrgastraum zugewandten Innenseite 59 die erste Verkleidungsvorrichtung 10 trägt. Schließlich ist in Fig. 7 eine rechte Tür 60 - Beifahrertür - des Kraftfahrzeugs dargestellt, deren Aufbauwand 15 mit der der zweiten Verkleidungsvorrichtung 11 versehen ist.

## Patentansprüche

1. Flächige Wand, insbesondere Aufbauwand für ein Kraftfahrzeug, die zumindest bereichsweise mit einer an dieser Aufbauwand befestigten schall- und schwingungsdämpfenden Einrichtung versehen ist, welche Einrichtung durch eine vorgefertigte Verkleidung der Aufbauwand gebildet wird, die bspw. mehrere Lagen aufweist, **dadurch gekennzeichnet, dass** durch definierten Beschnitt (9 und 37) der vorgefertigten Verkleidung (4 und 36) zumindest eine erste Verkleidungsvorrichtung (10; 38) und eine zweite Verkleidungsvorrichtung (11 und 39) sich ergibt, die als schall- und schwingungsdämpfende Einrichtungen (12 und 13) an zwei verschiedene Aufbauwände (14 und 15) wirksam sind, wobei ausgehend von der Gesamtfläche der Verkleidung (4 und 36) jede Verkleidungsvorrichtung (10, 38 oder 11,39) einen relativ großen Flächenbereich (Fb) der zugehörigen Aufbauwand (14 oder 15) abdeckt.

2. Flächige Wand nach Anspruch 1, **dadurch gekennzeichnet, dass** jede Verkleidungsvorrichtung (10, 38 oder 11,39) flächige Verkleidungsabschnitte (16 bis 23; 24 bis 31 oder 40 bis 41; 46 bis 48) aufweist, zwischen denen sich korrespondierende Verkleidungsausschnitte (32 und 33; oder 43 bis 44; 49 bis 51) erstrecken.

3. Flächige Wand nach den Ansprüchen 1 und 2, **dadurch gekennzeichnet, dass** der Beschnitt (9) nach Art eines Labyrinths mit in sich verschlungenen Verkleidungsabschnitten (16 bis 23) und Verkleidungsausschnitten (24 bis 31) ausgeführt ist.

4. Flächige Wand nach Anspruch 3, **dadurch gekennzeichnet, dass** die Verkleidungsabschnitte (16 bis 23; 24 bis 31) des Labyrinths als im Winkel zueinander verlaufend Geraden ausgeführt sind, deren Länge sich in der Verkleidungsvorrichtung (10 oder 11) von einem inneren Bereich (34) aus zu einem äußeren Bereich (35) hin vergrößert.

5. Flächige Wand nach Anspruch 3, **dadurch gekennzeichnet, dass** die Verkleidungsabschnitte und die Verkleidungsausschnitte einer jeden Verkleidungsvorrichtung (10 oder 11) des Labyrinths in Form einer Spirale verlaufen.

6. Flächige Wand nach einem oder mehreren der vorangehenden Ansprüche, **dadurch gekennzeichnet, dass** der Beschnitt (37) der Verkleidung (36) einen wellenförmigen oder verzahnungsartigen Verlauf aufweist.

7. Flächige Wand nach Anspruch 6, **dadurch gekennzeichnet, dass** der wellenförmige oder verzahnungsartige Verlauf an der jeweiligen Verkleidungsvorrichtung (38 und 39) eine Art Kammprofil mit Verkleidungsabschnitten (4 bis 42; 46 bis 47) und Verkleidungsausschnitten (43 bis 45; 49 bis 51) darstellt.
